**Europäisches Patentamt**

**European Patent Office**

**Office européen des brevets**

(19)

(11) Publication number : **0 573 477 B1**

## (12) EUROPEAN PATENT SPECIFICATION

(45) Date of publication of patent specification :
**05.04.95 Bulletin 95/14**

(51) Int. Cl.[6] : **G01F 1/68,** G01F 1/712,
G01P 5/10, G01P 5/22

(21) Application number : **92905200.9**

(22) Date of filing : **21.02.92**

(86) International application number :
**PCT/SE92/00105**

(87) International publication number :
**WO 92/14993 03.09.92 Gazette 92/23**

(54) **THERMOMETRIC FLOW MEASUREMENT.**

(30) Priority : **22.02.91 SE 9100526**

(43) Date of publication of application :
**15.12.93 Bulletin 93/50**

(45) Publication of the grant of the patent :
**05.04.95 Bulletin 95/14**

(84) Designated Contracting States :
**CH DE FR GB IT LI NL**

(56) References cited :
**EP-A- 0 232 719**
**DE-A- 3 423 966**
**US-A- 4 248 085**
**Derwent's abstract No. H75 82 C/36, SU 710**
**004, publ. week 8036 MOGILNER**

(56) References cited :
**TECHNISCHES MESSEN TM, Vol. 56, 1989 W.**
**SHU et al: "Durchflussmessung in Rohren mit**
**Hilfe von künstlichen und natürlichen Mar-**
**kierungen.", see page 58-65**
**Journal of Physics E: Scientific Instruments,**
**Vol. 3, No. 8, August 1970 K. P. Termaat:**
**"Fluidflow measurements inside the reactor**
**vessel of the 50M We Dodewaard nuclear**
**power plant by crosscorrelation of ther-**
**mocouple signals.", see page 589-593**

(73) Proprietor : **STENLUND, Lars, Emanuel**
**Tvistevägen 48,**
**Box 1465**
**S-901-24 Umea (SE)**

(72) Inventor : **STENLUND, Lars, Emanuel**
**Tvistevägen 48,**
**Box 1465**
**S-901-24 Umea (SE)**

(74) Representative : **Grennberg, Erik Bertil**
**H. ALBIHNS PATENTBYRA AB**
**P.O. Box 3137**
**S-103 62 Stockholm (SE)**

EP 0 573 477 B1

EP 0 573 477 B1

## Description

The invention relates to a method according to the preamble of Claim 1, and to apparatus for carrying out the method.

There are many situations in which it is necessary to be able to measure the flow of fluid in a pipe, in the absence of permanent installations. For example, there may be a need to measure the flow of a medium in district heating networks at any one of a number of accessible points, in order to be able to localize a suspected leakage.

There may also be a need to measure the flow of medium in a central heating pipe in a building structure, because of a suspected short circuit or a stoppage in the system. There are many examples of different situations in which there is a need to measure the flow of medium in a pipe or conduit, without performing work on the actual pipe or conduit itself.

DE-A-3 423 966 teaches a method of measuring the flow of a medium in a conduit with the aid of two sequentially mounted, quick-response thermometers. In this case, there is generated a temperature-change front which travels through the conduit, for instance by causing an upstream heating element to generate a heat pulse, or by changing the setting of a mixer valve. When the distance between the thermometers is known, the flow rate of the medium can be calculated, by measuring the time lapse between the occurrences of the front at respective temperatures.

GB-A-2 159 631 teaches a measuring device which is based on similar principles, although in this case one thermometer is replaced with a quick-response heat source, the activation of which constitutes a starting point and wherein a signal from a downstream thermometer is detected in order to determine the time of flight or transit time.

SU-A-710 004 teaches an arrangement in which two thermocouples are mutually spaced in the path of a liquid medium flowing in through conduit. The thermocouples are connected in series and the frequency spectrum of the resultant composite signal is analyzed. This is said to show a sharply defined minimum for a given frequency, from which the rate of flow of the medium can be established.

US-A-4 604 904 deals with measuring the correlationship between different parameters that occur spontaneously along a pipe (capacitance, ultrasonic, optical detection, thermodetection, electrical charging, conductivity), and proposes that a plurality of capacitive measuring sensors are placed along the pipe at distances from one another which will enable the terminal length of the measuring apparatus along the pipe to be compensated for.

One industrially used, standard flow meter is based on generating a homogenous magnetic field through an insulating pipe, in the transverse direction of the flow. According to Faraday's law, a voltage will then occur perpendicularly to both the field and to the flow direction. Such meters provide a result which indicates the volumetric flow, independent of the nature of the flow. Such flow meters, however, are both complicated and expensive.

It is an object of the present invention to provide a method and apparatus for measuring the flow of a medium, which, with respect to the quality of the measurements, is able to compete with magnetic measurements, but which is simpler, less expensive and easier to apply or to install, but which will nevertheless provide a satisfactory result.

It has been found, surprisingly, that this object can be achieved by effecting correlation measurement with temperature sensors which are mounted in thermal contact with the outer surface of a standard pipe, wherein the only work required is that of ensuring that the pipe surface is sufficiently clean to provide a good contact. In certain cases, it may be appropriate to form a simple recess or shallow in the pipe surface. The signals obtained from the sensors are sampled and the sampling results stored. The correlation between the signal-series for different time shifts is determined and the highest correlation factor chosen. The time shift corresponding to this highest correlation factor then constitutes, together with the distance, an expression for the velocity of the flowing medium. When the cross-sectional area of the conduit or pipe is known, the rate of flow can be determined.

When making a comparison between the measurements with the aid of a magnetic flow meter, it was found that extremely good agreement is obtained with highly satisfactory linearity.

When measuring correlation on spontaneously occurring temperature fluctuations, by detecting the fluctuations from outside the pipe or conduit, it has been found necessary to work with relatively long sampling series, in order to obtain an overdefined system of measurements which can be processed in accordance with the least squares method. It is not possible to effect a simple transit time measurement, as when generating a gradient artificially and measuring with the aid of sensors mounted in the flow of, and consequently it is necessary to work with statistic correlation methods. With the exception of extremely simple cases in which rapid variations occur, it is also necessary to work with a calculated transfer function or transverse correlation whose

2

maximum value will give the desired transit time measurement, while using physically reasonable secondary conditions.

The invention will now be described in more detail with reference to an exemplifying embodiment thereof and also with reference to the accompanying drawings.

Figure 1 illustrates a system for measuring the flow of medium in a pipe, in accordance with the invention.

Figure 2 illustrates diagrammatically an amplifying and filtering chain for obtaining a temperature signal.

Figure 3 is a block schematic of a two-channel system constructed in accordance with Figure 2.

Figures 4 A-D illustrate examples of the correlation result measured and calculated with different secondary conditions.

Figures 5 A-E illustrate examples of comparisons between measurements carried simultaneously with magnetic flux intervals and in accordance with the invention, in which the fluid was a liquid, namely water.

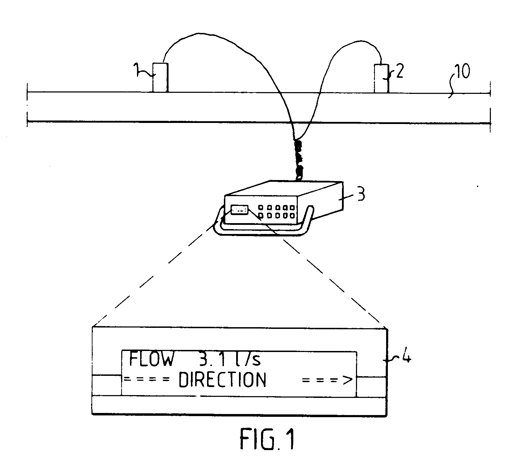

As illustrated in Figure 1, the inventive measuring process is effected with the aid of two measuring heads 1, 2 which are mutually spaced along a pipe. The measuring result is obtained from a central processing unit 3 which includes an indicator window 4. The measuring heads are appropriately given different colours, for instance red and blue, so that the meter will show when the current passes from "red to blue" or vice versa.

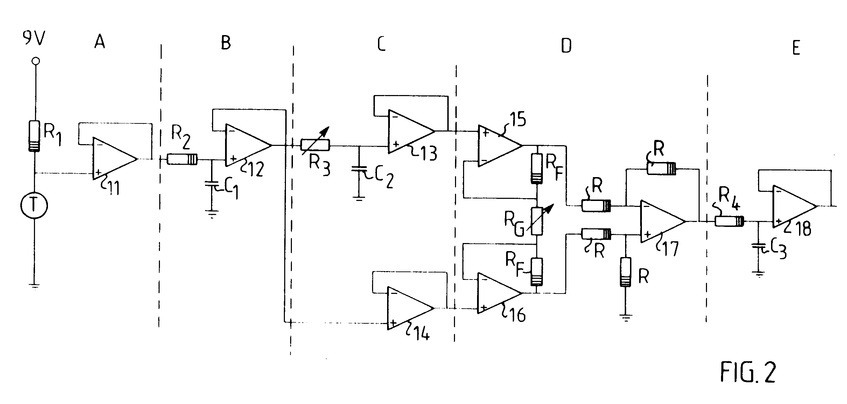

Figure 2 illustrates a measuring circuit which functions to measure the variations in temperature that occur externally along the pipe. A thermistor T is located adjacent the measuring head. A resistor R is connected, together with the thermistor, between earth and a constant voltage. The voltage of the junction is the magnitude whose variations are to be studied. Although the measuring head may incorporate more or less all of the electronics, it is preferred at present for the measuring head to incorporate only the thermistor, said measuring head being connected to the remainder of the circuit by means of a screened, twisted pair of conductors, so that the impedance-adapting amplifier 11 and the resistor R 1 will be spaced from the thermistor. High frequency disturbances are eliminated by a lowpass filter R2C1. The variable resistor R3 is provided in order to bring the voltage variations generated by the temperature variations to a suitable scale. The time constant R3C2 may be given relatively long duration, e.g. a duration of 100 s. The amplifiers 12, 13 and 14 form a pushpull coupled stage together with the amplifiers 15, 16 and 17, whereas R4C3 eliminates high frequency signals and an output signal can be collected from the output of the amplifier 18. The various amplifiers may be standard amplifiers (e.g. type 741). The output signals are then sampled with a sampling frequency of 1-50 Hz.

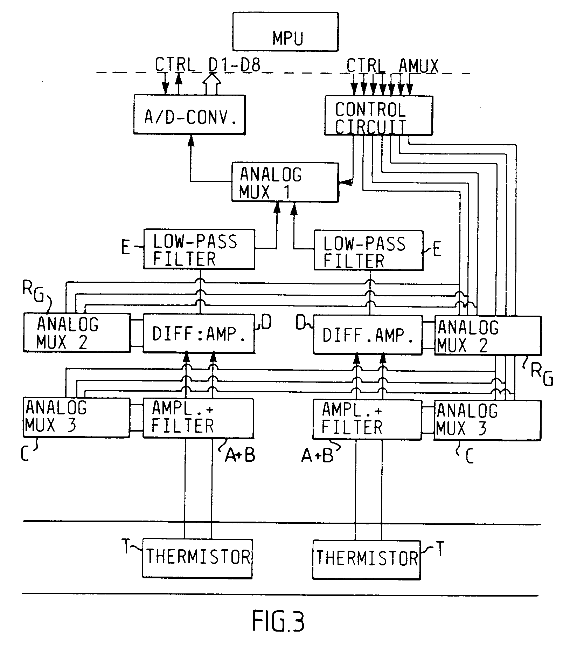

For practical reasons, it is suitable to construct the system in a slightly more complicated way, since it is desired to automate the setting of the resistor R3, so that even the most significant bit is preferably filled in an AD-converter. In the block schematic shown in Figure 3, the stages A-E in Figure 2 are corresponded by duplicated boxes, so that signals from the thermistors can be taken sequentially to the computer MPU. The Analog Mux 1 of a first multiplex circuit delivers analog signals to the analog-digital-converter. The Analog Mux 2 of a second multiplex circuit adjusts the resistor $R_G$ under the control of the computer, so that the converter will neither obtain a signal which is so large as to result in data overflow, nor a signal which is so small as to reduce the number of significant bits.

By controlling the remaining units (Mux 1, Mux 2, Mux 3), the signal unit MPU is able to detect the voltages across the thermistors, for instance each second, and to take up, e.g., 1024 values each with 8 bits. It is then suitable to perform the relevant calculations for one such time series and to take in 10 new values, while eliminating the 10 oldest values, and to perform a new calculation.

# CALCULATION OF THE TRANSFER FUNCTION

Conventions:

| | |
|---|---|
| **W** | column-matrices: upper cases in bold. |
| **W**$_i$ | lower case letters with indexes: matrices elements. |
| **W** (underlined) | remaining matrices: in bold and underlined. |

Signs:

| | |
|---|---|
| **M** | number of points in **X** and **Y** respectively. |
| **m** | = **M-1**. |
| **T1, T2** | time series with temperature data. |
| **X, Y** | **T1** and **T2** respectively differentiated twice ($x_i$, $y_i$, $0 \leq i \leq m$). |
| N | number of points in **A**. |
| n | = N-1. |
| **A** | auto-covariance-function for **X** ($a_i$, $-n \leq i \leq n$). |
| **C** | cross-covariance-function between **X** and **Y** ($c_i$, $0 \leq u \leq$). |
| **H** | transfer function ($h_i$, $0 \leq i \leq n$). |

3

#.1 PROCESSING OF MEASURED DATA

The time series **T1** and **T2** respectively are obtained by measuring the temperatures at locations 1 and 2 at discrete points in time. The auto-covariance and cross-covariance-functions can only be calculated from static time series, i.e. time series in which the waiting value is independent of time. Since temperature data measured over a relatively short period of time (some minutes) may well include trends, and thus not be static, it is necessary to differentiate data prior to analysis. We differentiated twice with a "soft" differentiation method which did not only take into account the nearest lying points:

$$T1_i = \frac{1}{8} (T_{1+2} + 2T_{i+1} - 2T_{i-1} - T_{1-2})$$

All analyses have been made on the time series **X**, $(x_0, x_1, x_2, ..., x_m)$, **Y**, $(y_0, y_1, y_2, ... y_m)$, where $x_i$, $y_i$ were calculated in accordance with

$$X_i = T1_i$$
$$x_i = T2_i$$

#.2 THE TRANSFER FUNCTION

Our basic assumption is that **Y** is linearly dependent on **X** in accordance with the transfer function **H**. The following relationship applies when disturbances can be ignored

$$Y_i = \sum_{k=0}^{\bowtie} h_k \, x_{i-k} \qquad\qquad (\texttt{H-def})$$

In the transfer function **H**, the truth that $h_i$ equals 0 when i<0 will apply for each physical system. The opposite would imply that the system is responsive to future events.

We also assume that the effect of a separate event decays and looses significance after a given period of time, i.e. $h_i=0$ when i>n.

#.3 AUTO- AND CROSS-COVARIANCE

In the case of a time series, the term variance for a stocastic variable can be broadened to include the expression auto-covariance-function. In addition to the variance ($=a_0$), the expression also includes certain information concerning possible periodicity, among other things.

As with the case when calculating mean values and variances, we are unable to produce the precise auto-covariance-function; it must be estimated. The formula is

$$a_i = \frac{1}{r} \sum_{k=j}^{r+j} x_k \, x_{k-i} \qquad\qquad (\texttt{A-def})$$

where r and j can be randomly selected. In order to be able to calculate an auto-covariance, it is necessary for the time series to be static. A static time series implies that the expectance value of $a_i$ is dependent on j in the above definition.

Note that $a_{-i} = a_i$.

In the case of two time series, there is defined the cross-covariance-function which provides information relating to the coupling between two time series. The cross-covariance, C, is estimated with the aid of the formula

$$c_i = \frac{1}{r} \sum_{k=j}^{r+j} Y_k \, x_{k-i} \qquad\qquad (\texttt{C-def})$$

#.4 LEAST SQUARES-ADAPTATION OF **H**

When **X** and **Y** are known and **H** is sought, equation (H-def) provides an overdetermined equation system

$$
\begin{pmatrix}
x_n & x_{n-1} & \cdots\cdots & x_1 & x_0 \\
x_{n+1} & x_n & \cdots\cdots & x_2 & x_1 \\
x_{n+2} & x_{n+1} & \cdots\cdots & x_3 & x_2 \\
\cdot\cdot & \cdot\cdot & \cdots\cdots & \cdot\cdot & \cdot\cdot \\
\cdot\cdot & \cdot\cdot & \cdots\cdots & \cdot\cdot & \cdot\cdot \\
x_m & x_{m-1} & \cdots\cdots & \cdot\cdot & x_{m-n}
\end{pmatrix}
\begin{pmatrix}
h_0 \\
h_1 \\
\cdot\cdot \\
h_n
\end{pmatrix}
=
\begin{pmatrix}
y_n \\
y_{n+1} \\
y_{n+2} \\
\cdot\cdot \\
\cdot\cdot \\
y_m
\end{pmatrix}
$$

or

$$\underline{X}\,H = Y \quad \text{(H - over)}$$

Because of disturbances in **X** and **Y**, there is no transfer function which will precisely solve equation (H-over), although the best approximation is found through the least squares method. The present demonstration is performed on the basis hereof.

The problem is one of finding the matrix **H** which minimizes **RES**, the sum of the squared residuals. From the equation (H-def):

$$
RES = \sum_{i=n}^{m} \left( \left( \sum_{k=0}^{n} h_k\, x_{i-k} \right) - y_i \right)^2
$$

in matrix form:

$$RES = (\underline{X}\,H - Y)^T(\underline{X}\,H - Y) =$$
$$= (\underline{X}\,H)^T(\underline{X}\,H) - (\underline{X}\,H)^T Y - Y^T(\underline{X}\,H) + Y^T Y =$$
$$= H^T\underline{X}^T\underline{X}\,H - 2H^T\underline{X}^T Y + \text{const.} \quad \text{(RES)}$$

where the rule for the transponat of a matrix $(\underline{A}\,\underline{B})^T = \underline{B}^T\underline{A}^T$ has been used to obtain the last line.

This sum has its minimum when

$$\frac{\partial RES}{\partial h_i} = 0 \text{ for all i's, } 0 \leq i \leq n$$

$$\frac{\partial RES}{\partial h_i} = (H^T\underline{X}^T\underline{X})_i + (\underline{X}^T\underline{X}\,H)_i - 2(\underline{X}^T Y) =$$
$$= 2(\underline{X}^T\underline{X}\,H)_i - 2(\underline{X}^T Y)_i$$

where $(...)_i$ denotes the i:th element in the vector.

These N equations together give the well known formula for the least square method:

$$\underline{X}^T\underline{X}\,H = \underline{X}^T Y \quad \text{(H - from - XY)}$$

A closer examination of the matrices $\underline{X}^T\underline{X}$ and $\underline{X}^T\underline{Y}$ show that the matrices elements are comprised of elements from the auto-covariance-functions and the cross-covariance-functions.

$$
(X^T Y)_i = \sum_{k=n}^{m} y_k\, x_{k-i} = (m+1-n)\, c_i
$$

$$\rightarrow \underline{X}^T Y = (m+1-n)\, C$$

$$(X^TX)_{i,j} = \sum_{k=n}^{m} x_{k-i}\, x_{k-j} = (m+1-n) \cdot a_{i-j}$$

$$\rightarrow \underline{X}^T\underline{X} = (m+1-n)\, \underline{A}$$

where

$$\underline{A} = \begin{pmatrix} a_0 & a_{-1} & a_{-2} & \cdots\cdots & a_{-n} \\ a_1 & a_0 & a_{-1} & \cdots\cdots & a_{1-n} \\ a_2 & a_1 & a_0 & \cdots\cdots & a_{2-n} \\ \cdot\cdot & \cdot\cdot & \cdot\cdot & \cdots\cdots & \cdot\cdot \\ a_n & a_{n-1} & a_{n-2} & \cdots\cdots & a_0 \end{pmatrix}$$

The equation can thus be written as

$$\underline{A}\, H = C \quad (H\text{ - from - }AC)$$

## #.5 DIRECT DERIVATION FROM THE DEFINITIONS

The equation (H-from-AC) can thus be derived directly from the definitions (H-def), (A-def) and (C-def). These relationships can be written in a simpler manner, with the aid of the convolution operator, $*$:

$$Y = H * X$$
$$A = X * X$$
$$C = Y * X$$

The cross-covariance-function can then be written as

$$C = Y * X =$$
$$= (H * X) * X =$$
$$= H * (X * X) =$$
$$= H * A$$

where we have utilized that the convolution operator is associative i.e. **(f∗g)∗h=f∗(g∗h)**.

This expression can be rewritten in summa form,

$$c_i = \sum_{k=0}^{n} h_k\, a_{i-k}$$

or in matrix form,

$$C = \underline{A}\, H$$

which is identical to equation (H-from-AC) from the preceding section.

## #.6 CALCULATING H WITH THE AID OF THE EQUATION SYSTEM

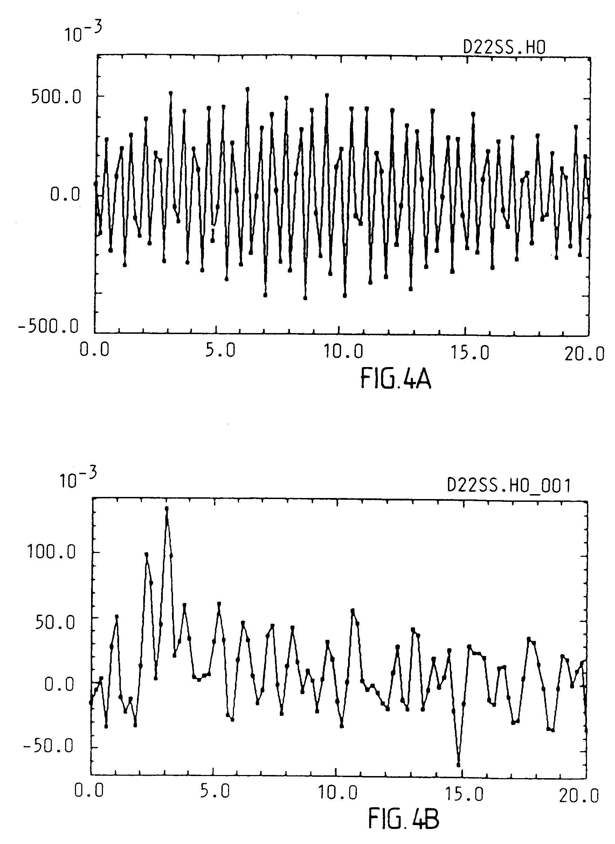

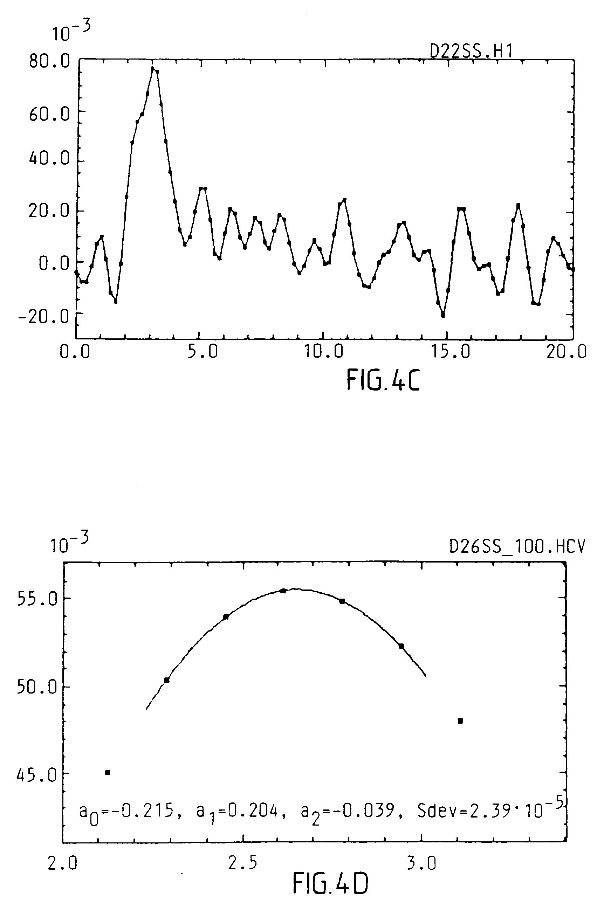

The equation system (H-from-AC) may, of course, be attacked directly with standard methods in order to resolve **H**. When this was carried out in one experiment (pipe D, v=0.88 m/s), hi, $0 \leqq i \leqq n$ according to Figure 4A was obtained. The **H** obtained in this manner gave no useful information whatsoever. Disturbances in measurement data dominated totally.

The following values are those which can be expected of the transfer function for this system:

1. $h_i \geqq 0$ for $0 \leqq i \leqq n$.
2. $h_i$ small for i=0 and i->n.
3. A quiet sequence of the h-values.
4. The h-values grow monotonously towards a maximum and then decrease monotonously towards zero.

In order to obtain a physically reasonable transfer function, we solve the equation system (H-from-AC) with the secondary condition that the sum of h:s second-differences shall be small. This condition provides a "quiet" sequence of the h-values.

The difference can be written as

$$D_{i+1,i} = h_{i+1} - h_i$$

The second order difference will then be

$$D_i^2 = D_{i+1,i} - D_{i,i-1} = (h_{i+1} - h_i) - (h_i - h_{i-1})$$

$$= h_{i+1} - 2 * h_i - h_{i-1}$$

The form factor is the sum of the second order differences in the square

$$FORM = \sum_{i=-1}^{n+1} (D_1^2)^2 =$$

$$= \sum_{i=-1}^{n+1} (h_{i-1} - 2*h_i + h_{i+1})^2 \quad H^T Q H$$

where

$$Q = \begin{pmatrix} 6 & -4 & 1 & 0 & 0\ldots\ldots\ldots0 \\ -4 & 6 & -4 & 1 & 0\ldots\ldots\ldots0 \\ 1 & -4 & 6 & -4 & 1\ldots\ldots\ldots0 \\ 0 & 1 & -4 & 6 & -4\ldots\ldots\ldots0 \\ 0 & 0 & 1 & -4 & 6\ldots\ldots\ldots0 \\ \ldots\ldots\ldots\ldots\ldots\ldots\ldots\ldots\ldots\ldots \\ 0 & 0 & 0 & \ldots\ldots\ldots.1 & -4 \quad 6 \end{pmatrix}$$

The equation (RES) is modified by adding the above form factor, multiplied with a weighting factor, $\beta$. The new expression is

$$RES = HT(X^T X + \beta Q)H - 2 H^T X^T Y + const.$$

As before, the problem is one of finding the H which minimizes RES. Analogously with the above derivation (RES) - (H-from-XY) there is obtained the equation system

$$(X^T X + \beta Q)H = X^T Y$$

which for a static time series can be replaced with

$$(A + \beta q)H = C \quad (H - from - ACQ)$$

Figures 4B-C illustrate analyses of the same data as Figure 4A, although with the above equation. The Figures show analyses with different values of $\beta$: 0.001, 1.0 and 100. A clear improvement is already obtained when $\beta=0.001$, and when $\beta=100$ the result is clearly acceptable, even though the configuration of the curve is still not exactly what one would expect from a physical aspect.

EP 0 573 477 B1

#.7 THE EQUATION IN THE PROGRAM HCOV

Originally, however, another equation is derived for determining **H**. With a starting point from equation (H-from-AC), derived directly from the definitions according to section #.5, there was obtained

$$\text{RES} = \mathbf{H}^T(\underline{\mathbf{A}}^T\underline{\mathbf{A}}^T + \alpha\,\underline{\mathbf{Q}})\mathbf{H} - 2\,\mathbf{H}^T\underline{\mathbf{A}}^T\underline{\mathbf{C}} + \text{const.}$$

The H which minimizes RES is then given by the equation

$$(\underline{\mathbf{A}}^T\underline{\mathbf{A}} + \alpha\,\underline{\mathbf{Q}})\mathbf{H} = \underline{\mathbf{A}}^T\mathbf{C} \quad \text{(H - HCOV)}$$

It can be shown that this expression is closely related to equation (H-from-ACQ). When multiplying both sides with $(\underline{\mathbf{A}}^T)^{-1}$ from the left there is obtained

$$(\underline{\mathbf{A}}^T)^{-1}(\underline{\mathbf{A}}^T\underline{\mathbf{A}} + \alpha\,\underline{\mathbf{Q}})\mathbf{H} = (\underline{\mathbf{A}}^T)^{-1}\underline{\mathbf{A}}^T\mathbf{C}$$
$$\rightarrow (\underline{\mathbf{A}} + \alpha\,(\underline{\mathbf{A}}^T)^{-1}\underline{\mathbf{Q}})\mathbf{H} = \mathbf{C}$$

which shows that equation (H-HCOV) used in our analyses only differs from equation (H-from-ACQ) in that $(\underline{\mathbf{A}}^T)^{-1}\underline{\mathbf{Q}}$ is used instead of $\underline{\mathbf{Q}}$.

#.8 DETERMINING HEAT PULSE VELOCITY

The purpose of the analyses is to obtain a measurement of the time required for a heat pulse to travel through a given distance in the pipe. In order to achieve this, we adapt a second degree polynomial to the five points in H which lie nearest the top, Figure 4D. $\lambda_{max}$, i.e. the $\lambda$ for which h is maximum ($\lambda$ is a continuous variable), can be easily obtained from the curve $h(\lambda)$.

In order to determine the velocity of the heat pulse, we also require: DTIME the time between two mutually sequential measurements. DIST the distance between the measuring points on the pipe.

The calculated velocity is

$$V_b = \frac{DIST}{\lambda_{MAX}\,DTIME}$$

The calculations can be carried out on a computer, for instance a conventional Personal Computer. Since the actual algorithms for numerical calculation are well known in themselves, they can be taken from standard literature, such as Press et al, "Numerical Recipes" (Cambridge University Press, 1988).

Comparison tests have been carried out with the aid of the aforedescribed method. The comparisons were carried out with the aid of a flow meter manufactured by Endress & Hauser. A series of flows were arranged in pipes of five different internal diameters, ranging from between 12.5 mm and 35.9 mm. The rates of flow were varied from 0.3 m/s to 1.06 m/s, with the Reynold's number varying from between 1.100 to 15.000. The linearity was found to be good and the accuracy was as good as one could expect in view of the fact that the internal diameters of the pipes were not known to desired degrees of accuracy.

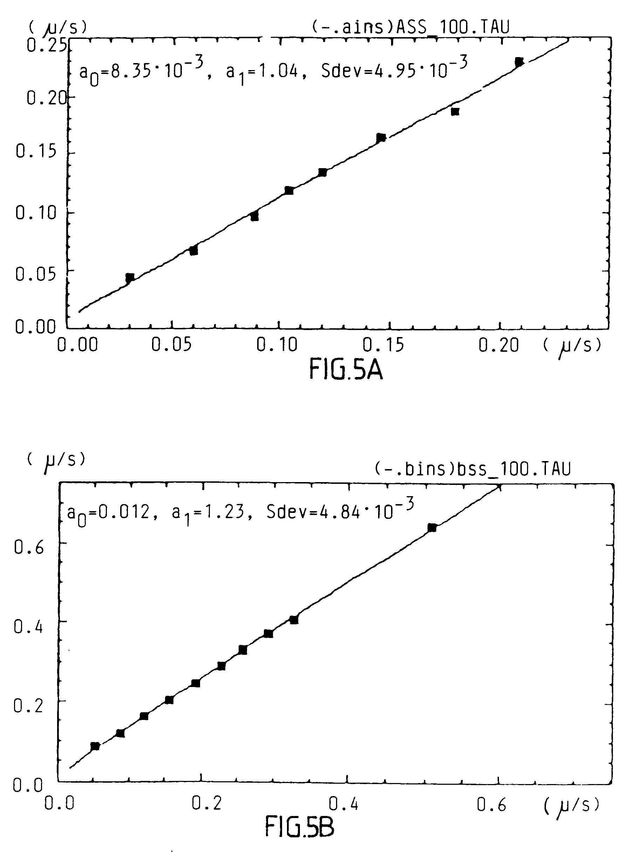

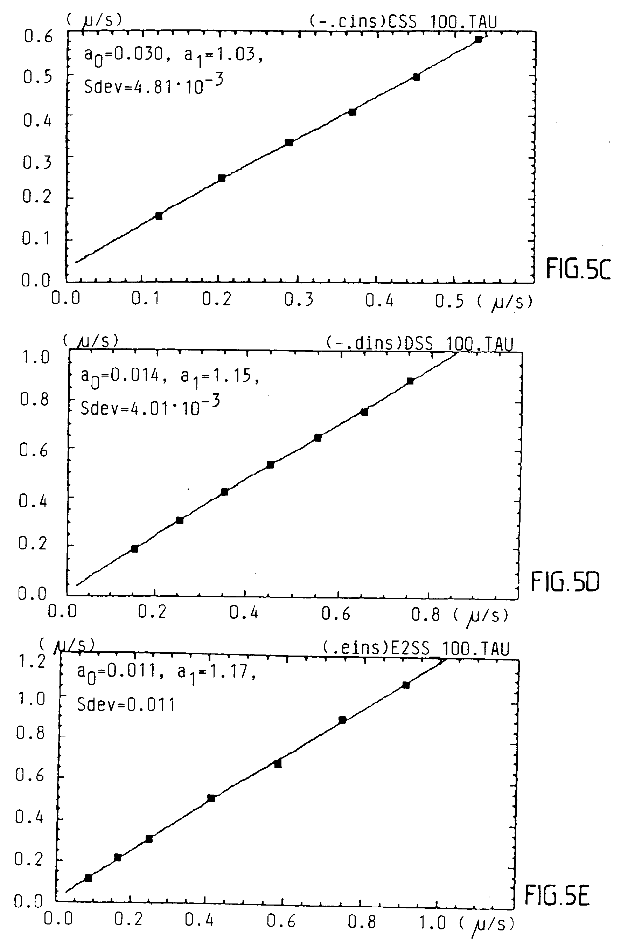

The graphs shown in Figures 5A-5C have been drawn on the basis of pipes whose respective diameters were 35.9 mm, 27.2 mm, 21.6 mm, 16.0 mm and 12.5 mm (estimated values on the basis of measured external diameters and measured wall thicknesses at the ends of respective pipes). The thermometrically measured values are plotted along the y-axis of the graphs, and it will be seen from the graphs that the linearity is very good and that the measurements are clearly reliable.

**Claims**

1. A method for measuring the rate of flow of a fluid through a pipe, comprising measuring temperature changes at at least two different locations at mutually known distances along the pipe, **characterized** by mounting at two said positions, without contact with the fluid, temperature sensors which produce electrical temperature signals which are sampled a large number of times m, wherein one sampling series, $\underline{X}=x_0, x_1,....x_m$ is taken from the one sensor and $\underline{Y}=y_0, y_1...y_m$ is taken from the other sensor, whereafter a transfer function $H=h_0, h_1,...h_n$ is calculated, where n is smaller than m and the elements of which fulfil the equation system

$$\mathbf{Y}_i = \sum_{k=0}^{n} h_k\,x_{i-k}$$
$$i = 0 - m$$

8

EP 0 573 477 B1

wherein H is determined by the least squares method; determining a maximun for the transfer function H, from which there is obtained the number of sampling intervals to which transport of the fluid over the known distance corresponds, from which the mean flow rate is determined.

2. A method according to Claim 1, **characterized** in that the overdefined equation system is resolved while using the secondary condition that second order differences between successive elements of the transfer function are small.

3. A method according to Claim 1 or 2, **characterized** in that the overdefined equation system is solved under the secondary condition that the first and the last elements have low values and that all are positive.

4. An arrangement for applying the method according to Claim 1, comprising two temperature sensors (T), **characterized** in that the arrangement also includes a computer being programmed to perform the calculations of Claim 1, an analog/digital converter, an amplifier having variable amplification (D), whose output signal is coupled to the analog/digital converter, a first multiplex circuit coupled to the computer for controlling the variable amplification, such that its output signal will be compatible with the analog/ digital converter, and a second multiplex circuit coupled to the computer so as to conduct alternately to the analog/digital converter signals from the two temperature sensors to the analog/digital converter.

**Patentansprüche**

1. Verfahren zur Messung der Flußrate eines Fluids durch ein Rohr, mit einer Messung von Temperaturänderungen an zumindest zwei unterschiedlichen Orten an jeweils bekannten Entfernungen entlang dem Rohr, **gekennzeichnet durch** Anbringung an zwei der Positionen, ohne Berührung mit dem Fluid, von Temperatursensoren, welche elektrische Temperatursignale erzeugen, die eine große Anzahl an Malen $m$ abgetastet werden, wobei eine Abtastreihe $\underline{X}=x_0, x_1,...x_m$ von dem einen Sensor abgenommen wird, und $\underline{Y}=y_0, y_1,...y_m$ von dem anderen Sensor abgenommen wird, woraufhin eine Übertragungsfunktion $H=h_0, h_1, ...h_n$ berechnet wird, bei welcher $n$ kleiner ist als $m$, und deren Elemente folgendes Gleichungssystem erfüllen

$$\underline{Y}_i = \sum_{\substack{k=0 \\ i=0-m}}^{n} h_k \, x_{i-k}$$

wobei H durch die Methode der kleinsten Fehlerquadrate bestimmt wird; Bestimmung eines Maximums der Übertragungsfunktion H, aus welchem die Anzahl an Abtastintervallen erhalten wird, welcher der Transport des Fluids über die bekannte Entfernung entspricht, woraus die mittlere Flußrate bestimmt wird.

2. Verfahren nach Anspruch 1,
dadurch **gekennzeichnet,** daß das überbestimmte Gleichungssystem unter Verwendung der Nebenbedingung gelöst wird, daß Differenzen zweiter Ordnung zwischen aufeinanderfolgenden Elementen der Übertragungsfunktion klein sind.

3. Verfahren nach Anspruch 1 oder 2,
dadurch **gekennzeichnet,** daß das überbestimmte Gleichungssystem unter der Nebenbedingung gelöst wird, daß die ersten und die letzten Elemente niedrige Werte aufweisen, und sämtliche Werte positiv sind.

4. Anordnung zum Einsatz des Verfahrens nach Anspruch 1, mit zwei Temperatursensoren (T),
dadurch **gekennzeichnet,** daß die Anordnung weiterhin einen Computer aufweist, der zur Durchführung der Berechnungen von Anspruch 1 programmiert ist, sowie einen Analog/Digitalwandler, einen Verstärker mit variabler Verstärkung (D), dessen Ausgangssignal auf den Analog/Digitalwandler gegeben wird, eine an den Computer angeschlossene, erste Multiplexschaltung zum Steuern der variablen Verstärkung, so daß ihr Ausgangssignal mit dem Analog/Digitalwandler verträglich ist, und eine zweite, an den Computer angeschlossene Multiplexschaltung, um so Signale von den beiden Temperatursensoren zum Analog/Digitalwandler abwechselnd an den Analog/Digitalwandler anzulegen.

9

**Revendications**

1. Procédé pour mesurer le débit d'un fluide dans une canalisation, comprenant la mesure de variations de température en au moins deux emplacements différents à des distances mutuelles connues le long de la canalisation, caractérisé par le montage auxdites deux positions, sans contact avec le fluide, de capteurs de température qui produisent des signaux électriques de température qui sont échantillonnés en un grand nombre d'instants m, dans lequel une série d'échantillonnage $\underline{X} = x_0, x_1, ...x_m$ est obtenue d'un capteur et $\underline{Y} = y_0, y_1....y_m$ est obtenue dans l'autre capteur, après quoi une fonction de transfert $H = h_0, ....h_1, ...h_n$ est calculée, où n est plus petit que m et dont les éléments satisfont au système d'équations :

$$Y_i = \sum_{\substack{k=0 \\ i=0-m}}^{n} h_k \; x_{i-k}$$

H étant déterminée par la méthode des moindres carrés; la détermination d'un maximum de la fonction de transfert H à partir duquel on obtient le nombre d'intervalles d'échantillonnage auquel correspond le transport du fluide sur la distance connue, à partir duquel le debit moyen est déterminé.

2. Procédé selon la revendication 1, caractérisé en ce qu'on résout le système d'équations sus-défini en utilisant la condition secondaire selon laquelle les différences du second ordre entre des éléments successifs de la fonction de transfert sont petites.

3. Procédé selon la revendication 1 ou 2, caractérisé en ce qu'on résout le système d'équations sus-défini en utilisant la condition secondaire selon laquelle les premier et dernier éléments ont de faibles valeurs et selon laquelle ils sont tous positifs.

4. Système pour appliquer le procédé selon la revendication 1, comprenant deux capteurs de température (T), caractérisé en ce que le système comporte également un ordinateur programmé pour effectuer les calculs selon la revendication 1, un convertisseur analogique/numérique, un amplificateur à amplification variable (D) dont le signal de sortie est appliqué au convertisseur analogique/numérique, un premier circuit de multiplexage relié à l'ordinateur pour commander l'amplification variable de façon que son signal de sortie soit compatible avec le convertisseur analogique/numérique, et un second circuit de multiplexage relié à l'ordinateur de façon à acheminer en alternance vers le convertisseur analogique/numérique des signaux provenant des deux capteurs de température.

FLOW   3.1 l/s
= = = = DIRECTION      = = = >

FIG. 1

FIG. 2

EP 0 573 477 B1

FIG.3

$10^{-3}$

D22SS.H0

FIG.4A

$10^{-3}$

D22SS.H0_001

FIG.4B

FIG.4C

$a_0 = -0.215$, $a_1 = 0.204$, $a_2 = -0.039$, Sdev = $2.39 \cdot 10^{-5}$

FIG.4D

FIG.5A

FIG.5B

FIG.5C

FIG.5D

FIG.5E